# EUROPÄISCHE PATENTANMELDUNG

(11) **EP 1 107 127 A2**
(43) Veröffentlichungstag der Anmeldung: **13.06.2001**
(21) Anmeldenummer: 00117927.4
(22) Anmeldetag: 21.08.2000
(51) Int. Cl.: G06F 17/30

(54) **Verfahren zur Verarbeitung von Datenpaketen**

(30) Priorität: 10.12.1999 DE 19959704
(71) Anmelder: Tenovis GmbH & Co. KG, 60326 Frankfurt (DE)
(72) Erfinder: Schmidt, Werner, 63762 Grossostheim (DE)
(74) Vertreter: Bohnenberger, Johannes, Dr.

(57) **Zusammenfassung**

Es wird ein Verfahren zur Verarbeitung von Datenpaketen vorgeschlagen, das dazu dient, in einem Speicher einer Vermittlungseinrichtung Adressen schnell zu verarbeiten, indem mittels eines RAMs ein CAM simuliert wird. Adressen eines Datenpakets werden in Segmente aufgeteilt, die höchstens der Größe einer Speicherzelle entsprechen. Wird eine Adresse unter den abgelegten Adressen im Speicher gesucht, wird zunächst ein erstes Segment untersucht und dann die dem ersten Segment zugeordneten Bereiche. Dadurch müssen nicht alle Einträge durchsucht werden, um die entsprechende Adresse zu finden oder festzustellen, daß kein Eintrag für diese Adresse vorliegt. Den abgespeicherten Adressen sind Informationen, wie z.B. eine Adreßübersetzung, zugeordnet.

## Beschreibung

### Stand der Technik

Die Erfindung geht aus von einem Verfahren zur Verarbeitung von Datenpaketen nach der Gattung des unabhängigen Patentanspruchs.

Es ist bereits aus der Patentschrift US-4 75 89 82 bekannt, einen Speicher aus einem RAM (Random Access Memory) und einem CAM (Content Adressable Memory) aufzubauen. Der CAM-Speicher stellt hier eine erste Stufe für eine Suche einer Adresse dar, während das RAM die zweite Stufe bildet.

### Vorteile der Erfindung

Das erfindungsgemäße Verfahren zur Verarbeitung von Datenpaketen mit den Merkmalen des unabhängigen Patentanspruchs hat demgegenüber die Vorteile, daß es einfacher realisiert wird, da zur Durchführung des erfindungsgemäßen Verfahrens nur ein RAM-Speicher verwendet wird, und daß Adressen in Segmente aufgeteilt werden, die eine Größe aufweisen, die der Größe von Speicherzellen beispielsweise 16 oder 32 Bit entspricht. Damit ist es vorteilhafterweise möglich, Segmente in einem Schritt aus dem RAM zu lesen und sofort weiter zu verarbeiten. Damit werden Lese-/Schreibzyklen erheblich reduziert und somit ein Geschwindigkeitsvorteil erzielt.

Die Verwendung von RAMs bringt weiterhin den Vorteil, daß durch die große Menge, die weltweit dafür hergestellt wird, eine hohe Verfügbarkeit und ein äußerst günstiger Preis realisiert wird.

Durch die in den abhängigen Ansprüchen aufgeführten Maßnahmen sind vorteilhafte Weiterbildungen und Verbesserungen des im unabhängigen Anspruch angegebenen Verfahrens zur Verarbeitung von Datenpaketen möglich.

Besonders vorteilhaft ist, daß die Suche mittels des erfindungsgemäßen Verfahrens mittels einer binären Suche durchgeführt wird, so daß es nicht notwendig ist, alle Einträge im Speicher zu überprüfen. Damit wird ein erheblicher Zeitvorteil gewonnen.

Weiterhin ist von Vorteil, daß mit den eingetragenen Adressen im Speicher eine Adreßübersetzung oder weitere Informationen zugeordnet sind, die dann für die Datenpakete ausgeführt werden.

Darüber hinaus ist es von Vorteil, daß, wenn kein entsprechender Eintrag für eine Adresse eines Datenpakets gefunden wird, dieses Datenpaket bezüglich der Verarbeitung ignoriert wird.

Weiterhin ist es von Vorteil, daß das Einfügen eines Eintrags in den Speicher derart geschieht, daß ein erstes Segment der Adresse im ersten Bereich des Speichers eingetragen wird oder, wenn es bereits existiert, zu dem zugeordneten zweiten Bereich des Speichers direkt weitergegeben wird, um dort einen Eintrag einzufügen.

Darüber hinaus ist es von Vorteil, daß das Löschen eines Eintrags aus dem Speicher zunächst mittels einer binären Suche durchgeführt wird und, wenn es erfolgreich ist, dann der entsprechende Eintrag gelöscht wird.

Darüber hinaus ist es von Vorteil, daß ein Segment im ersten Bereich des Speichers, das keinen Segmentbereich im zweiten Bereich des Speichers aufweist, aus dem Speicher gelöscht wird.

Ein weiterer Vorteil besteht darin, daß die Segmente lückenlos im Speicher nebeneinander angeordnet werden. Dies erlaubt eine einfachere Verarbeitung der abgespeicherten Segmente, da der Fall einer Lücke oder Segment nicht berücksichtigt werden muß. Die Segmentgrenzen der äußeren Segmentbereiche geben an, wann keine Segmente mehr zu finden sind.

### Zeichnung

Ausführungsbeispiele der Erfindung sind in der Zeichnung dargestellt und in der nachfolgenden Beschreibung näher erläutert. Es zeigen Figur 1 eine Adresse eines Datenpakets, Figur 2 die erfindungsgemäße Segmentierung einer Adresse im Speicher, Figur 3 das Einfügen eines Eintrags im Speicher und Figur 4 das Löschen eines Eintrags aus dem Speicher.

### Beschreibung

In Kommunikationsnetzen werden Datenpakete übertragen. Die Datenpakete weisen, um an ihr Ziel zu gelangen, Adressen auf. Die Adressen geben das Ziel und/oder Vermittlungseinrichtungen auf dem Weg durch ein Kommunikationsnetz zu dem Ziel an.

Diese Adressen haben je nach Komplexität des Kommunikationsnetzes eine Länge, die größer ist als die Länge einer Speicherzelle. Dies ist insbesondere bei ATM (Asynchronous Transfer Mode) der Fall.

ATM ist eine weit verbreitete Vermittlungstechnik, wobei Daten in Zellen mit verschiedenen Übertragungsgeschwindigkeiten und Prioritäten verarbeitet werden. Eine ATM-Zelle als Datenpaket hat eine Länge von 53 Bytes.

Bei einem neuen Verbindungsaufbau werden in Vermittlungseinrichtungen zu Beginn des Verbindungsaufbaus Adressen abgespeichert, zu denen weitere Informationen, wie eine Adreßübersetzung und/oder Routing-Informationen zugeordnet werden. Werden dann über diese Verbindung weitere Pakete übertragen, wird dann in der Vermittlungseinrichtung anhand der im Speicher der Vermittlungseinrichtung abgespeicherten Adressen festgestellt, ob und wenn ja welche Informationen diesen Datenpaketen zuzuordnen sind.

Die Adreßlänge ist weiterhin so beschaffen, daß der sich aus der Adreßlänge ergebende Adreßbereich erheblich größer als die Anzahl der benutzten Adressen ist. Die benutzten Adressen sind jedoch beliebig innerhalb des möglichen Adreßraums verteilt, so daß jeweils die gesamte Adresse eines Datenpakets auszuwerten ist. Sind aber Datenpakete in Echtzeit oder zumindest mit einer geringen Zeitverzögerung zu übertragen, ist die Verarbeitung dieser Datenpakete diesen strengen Zeitbegrenzungen unterworfen. Daher muß die Adresse im Speicher der Vermittlungseinrichtung schnell gefunden werden, um eine Totzeit und damit eine Verzögerung des zu vermittelnden Datenpakets zu vermeiden.

Der obengenannte CAM-Speicher eignet sich gut für solch assoziative Daten. Assoziative Daten sind in diesem Fall die Adressen und die zugeordneten Informationen. Bei einem CAM-Speicher werden Adressen von Datenpaketen parallel im Speicher gesucht. Dafür weist der CAM-Speicher einen entsprechenden Schaltungsaufbau auf, um diese parallele Suche zu gestatten. Bei einem RAM-Speicher hingegen wird über eine Leitung eine Adresse des RAM-Speichers spezifiziert.

Erfindungsgemäß wird ein RAM-Speicher verwendet, um Adressen in Segmenten und sortiert abzuspeichern. Durch die Sortierung wird eine binäre Suche ermöglicht, während die Segmentierung Teile der Adresse so lang gestaltet, daß sie in Speicherzellen des RAMs passen. Es wird demnach ein CAM mittels eines RAMs simuliert. Im folgenden bezeichnet demnach der Speicher ein RAM.

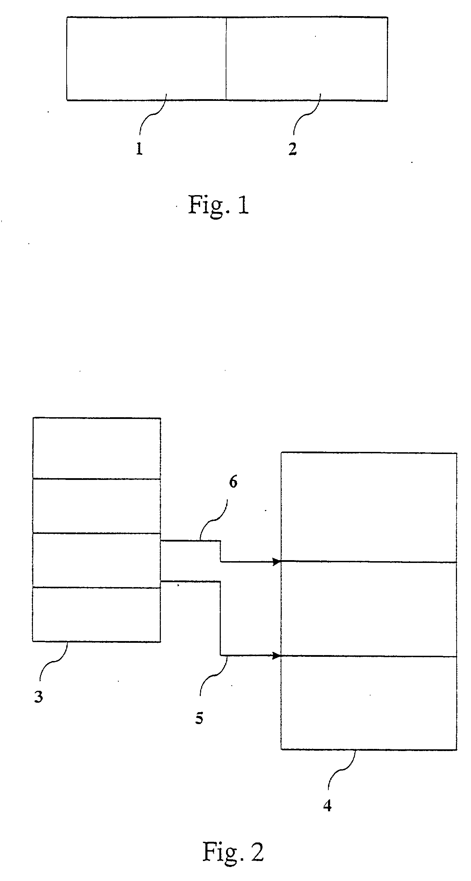

In Figur 1 wird die Adresse eines Datenpakets schematisch dargestellt. Die Adresse wird hier in ein erstes Adress-Segment 1 und ein zweites Adress-Segment 2 aufgeteilt, so daß die beiden Adress-Segmente in Speicherzellen eines Speichers in eine Vermittlungseinrichtung passen. Ist die Adresse des Datenpakets so lang, daß eine Aufteilung in zwei Adress-Segmente immer noch zu Segmenten führt, die größer als eine Speicherzelle eines Speichers sind, dann kann alternativ die Adresse auch in mehr als zwei Teile segmentiert werden.

In Figur 2 ist die erfindungsgemäße Segmentierung im Speicher schematisch dargestellt. In einem ersten Bereich 3 in dem Speicher der Vermittlungseinrichtung wird eine Zuordnung zwischen Adressen mit identischem erstem Adreßsegment und einem Teilbereich des zweiten Speicherbereichs 4, in dem die zweiten Adress-Segmente und die der Adresse zugeordneten Information abgelegt sind, vorgenommen.

Dabei dient das erste Adress-Segment als Zugriffswert für die Einträge des ersten Speicherbereichs 3.

Von jedem ersten Eintrag in dem ersten Bereich 3 des Speichers weisen zwei Zeiger 5 und 6 auf einen zugeordneten Teilbereich in einem zweiten Bereich 4 des Speichers. Der Zeiger 5 weist auf die untere Grenze des zugeordneten Speicher-Teilbereichs, während der Zeiger 6 auf die obere Grenze des zugeordneten Speicher-Teilbereichs weist. Der Speicher-Teilbereich ist damit einem Adress-Segment-Eintrag im ersten Bereich 3 des Speichers zugeordnet. Die Teilbereiche im zweiten Bereich 4 sind lückenlos hintereinander angeordnet, um eine effiziente Ausnutzung des Speichers zu gestatten. Die Teilbereiche im Speicherbereich 4 sind nach den ersten Adress-Segmenten geordnet, d.h. der Speicher-Teilbereich aller Adressen eines ersten Adress-Segments i liegt oberhalb des Speicherteilbereichs mit Adressen eines ersten Adress-Segments j, wenn i größer j und umgekehrt ist.

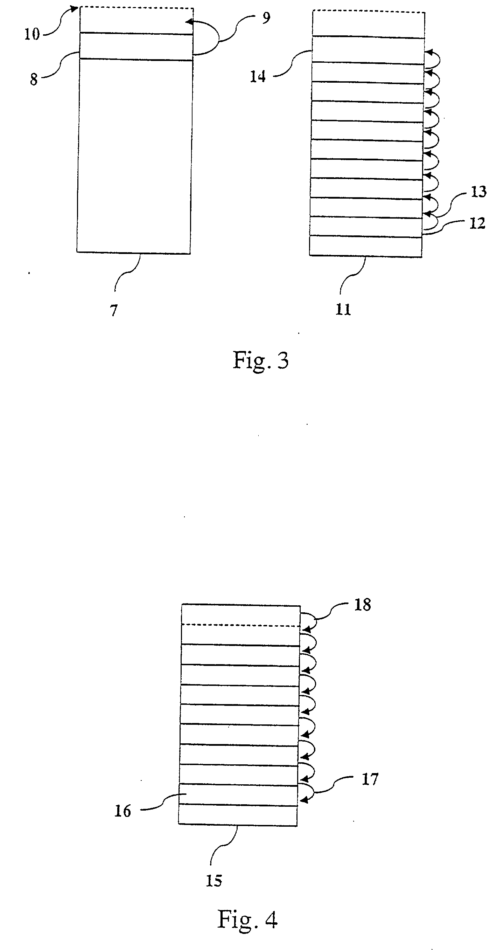

In Figur 3 wird das erfindungsgemäße Einfügung von Einträgen in den Speicher der Vermittlungseinrichtung dargestellt. Zunächst wurde im ersten Speicherteilbereich der zugeordnete Speicher-Teilbereichs bezüglich des zweiten Segments 2 gesucht.

Da die zweiten Segmente 2 in dem Speicherbereich 4 sortiert sind, wird die Stelle gesucht, an die das neue zweite Adress-Segment einzufügen ist, so daß der neue Eintrag sofort richtig einsortiert wird. Da die Teilbereiche des Bereichs 4 lückenlos aneinander schließen, müssen zunächst alle Teilbereiche mit ihren Einträgen oberhalb des gefundenen Teilbereichs verschoben werden, um eine Lücke für das Einfügen zu schaffen.

Dazu wird im ersten Speicherbereich 3 der oberste, nicht leere Teilbereich im Speicherbereich 4 ermittelt. Dann wird der oberste Eintrag 8 dieses Speicherbereichs 7 um ein Feld nach oben kopiert (Position 9). Anschließend wird der zugeordnete Zeiger 6 im Speicherbereich 3 um eins erhöht. Danach werden alle darunter liegenden Einträge des Teibereichs 7 im Speicherbereich 4 um ein Feld nach oben kopiert. Nach dem Kopieren des niedrigsten Eintrag wird der zugehörige Zeiger 5 im Speicherbereich 3 um eins erhöht. Nach sukzessivem Verschieben aller Teilbereiche im Speicherbereich 4 und dem Korrigieren der Grenzzeiger im Speicherbereich 3 für die Einträge oberhalb des aktuellen Teilbereichs 11 werden auch die Einträge in diesem Teilbereich oberhalb der gefundenen Einfügestelle 12 in gleicher Weise nach oben geschoben, einschließlich der Korrektur des zugehörigen Zeigers 6 im Speicherbereich 3. Dann wird der entsprechende Segmenteintrag an der entstandenen Lücke 12 eingefügt. Diese Methode gestattet, daß kein Segmenteintrag, der abgespeichert ist, überschrieben wird und während des Verschiebens die Adresstabellen korrekt ausgewertet werden können.

War der Teilbereich im Speicherbereich 4 vor dem Einfügen leer, so sind die Adresszeiger 5 und 6, ungültig; die genaue Einfügeposition ist daher zunächst unbestimmt. Sie wird aber beim Verschieben der höheren Teilbereiche im Speicherbereich 4 automatisch dadurch gefunden, dass sie dann durch die entstandene Lücke beim Verschieben des nächsthöheren nicht-leeren Teilbereichs gegeben ist. Gibt es keine höheren nicht-leeren Teilbereiche, so wird der Eintrag als derzeit oberster Eintrag im Speicherbereich 4 vorgenommen und der Wert des ersten leeren Felds im Speicherbereich 4 entsprechend korrigiert

In Figur 4 ist das erfindungsgemäße Löschen einer Adresse aus dem Speicher dargestellt. Zunächst wird das erste Segment der zu löschenden Adresse benutzt, um im Speicherbereich 3 die Grenzen des zugehörigen Teilbereichs im Speicherbereich 4 zu finden. Ist für das erste Adress-Segment kein gültiger Eintrag im Speicherbereich 3 vorhanden, ist demnach die zu löschende Adresse in dem Speicher nicht enthalten und der Löschvorgang wird abgebrochen.

Wird jedoch ein gültiger Teilbereich im Speicherbereich 4 gefunden, das dem ersten Segment der zu löschenden Adresse entspricht, dann wird in dem entsprechenden Teilbereich nach einem übereinstimmenden zweiten Segment der Adresse gesucht. Im Teilbereich 15 wurde dann das zweite Segment 16 gefunden, das der zu löschenden Adresse entspricht. Dann werden alle Einträge, die sich oberhalb des zu löschenden Eintrags 16 befinden, um ein Feld nach unten kopiert, so daß der Eintrag 16 überschrieben wird. Da alle Einträge nach unten kopiert werden, muß schließlich auch die obere Segmentgrenze des Segmentbereichs 15 um ein Feld nach unten korrigiert werden.

Danach werden alle darüber liegenden Teilbereiche ebenfalls um eine Eintrag nach unten geschoben. Dabei wird zunächst der unterste Eintrag nach unten kopiert, dann der zugehörige Zeiger 5 im Speicherbereich 3 dekrementiert, dann alle anderen Einträge diese Teilbereichs nach unten geschoben und zuletzt der zugehörige Zeiger 6 dekrementiert.

Entstehen durch das Löschen leere Teilbereiche so werdfen die zugehörigen Zeiger 5,6 im Speicherbereich 3 als ungültig markiert. War der gelöschte Eintrag der oberste Einatrg im Speicherbereich 4, so wird der Wert des niedrigsten leeren Eintrags auf diesen Eintrag gesetzt.

## Patentansprüche

1. Verfahren zur Verarbeitung von Datenpakten, wobei die Datenpakete anhand ihrer Adressen verarbeitet werden, wobei eine Menge von Adressen in einem Speicher abgelegt wird, wobei die Adressen in dem Speicher sortiert werden, wobei die Adressen der Datenpakete mittels einer binären Suche gesucht werden, dadurch gekennzeichnet, daß die Adressen, die die Menge aufweist, in Segmente aufgeteilt werden, daß ein erstes Segment einen ersten Bereich des Speichers adressiert, der die Grenzen eines zweiten Bereichs im Speicher ausweist, in dem weitere Segmente der Adresse sortiert abgespeichert werden.

2. Verfahren nach Anspruch 1, dadurch gekennzeichnet, daß, wenn eine Adresse eines Datenpakets in den im Speicher abgelegten Adressen gesucht wird, die Adresse des Datenpakets in entsprechende Segmente aufgeteilt wird, wie es für die im Speicher abgelegten Adressen durchgeführt wurde, daß das erste Segment der Adresse des Datenpakets den ersten Bereich des Speichers adressiert, daß durch die dort gefundenen Einträge ein zweiter Bereich des Speichers festgelegt wird, daß mittels der binären Suche im zweiten Bereich nach den weiteren Segmenten der Adresse gesucht wird, bis eine Übereinstimmung gefunden wird oder bis festgestellt wird, daß kein Eintrag für die gesuchte Adresse vorliegt.

3. Verfahren nach Anspruch 2, dadurch gekennzeichnet, daß wenn die Adresse des Datenpakets gefunden wurde, eine Adreßübersetzung oder andere Informationen dem Datenpaket mit der gefundenen Adresse zugeordnet werden.

4. Verfahren nach Anspruch 2, dadurch gekennzeichnet, daß, wenn keine Adresse des Datenpakets gefunden wurde, das Datenpaket ignoriert wird.

5. Verfahren nach einem der vorhergehenden Ansprüche, dadurch gekennzeichnet, daß mittels eines ersten Segments einer neu abzuspeichernden Adresse im ersten Speicherbereich ausgewählt wird, in welchem zweiten Bereich der bereits abgespeicherten Adresse mittels binärer Suche gesucht wird, an welcher Stelle die weiteren Segmente der neu abzuspeichernden Adresse und die zugeordneten Informationen abzuspeichern sind oder, daß, wenn mittels des ersten Segments der neu abzuspeichernden Adresse kein gültiger zweiter Speicherbereich ausgewählt wird, ein neuer zweiter Speicherbereich festgelegt wird, in dem die weiteren Segmente der neu abzuspeichernden Adresse und die zugeordneten Informationen abzuspeichern sind.

6. Verfahren nach einem der vorhergehenden Ansprüche, dadurch gekennzeichnet, daß mittels eines ersten Segments im ersten Speicherbereich festgelegt wird, in welchem zweiten Bereich des Speichers gesucht wird, bis ein weiteres Segment der zu löschenden Adresse gefunden wird, um dann dieses Segment und die zugeordnete Information zu löschen oder bis festgestellt wird, daß kein Eintrag für die zu löschende Adresse existiert.

7. Verfahren nach Anspruch 6, dadurch gekennzeichnet, daß nach dem Eintragen bzw. Löschen einer Adresse die Information im ersten Speicherbereich an die aktuelle Größe des zweiten Speicherbereichs angepaßt wird, wobei insbesondere kein zweiter Bereich des Speichers mehr existiert, der Eintrag im ersten Bereich des Speichers gelöscht wird.

8. Verfahren nach einem der vorhergehenden Ansprüche, dadurch gekennzeichnet, daß die Segmente in den Segmentbereichen lückenlos angeordnet werden.

9. Vermittlungseinrichtung nach einem der vorhergehenden Ansprüche, dadurch gekennzeichnet, daß die Vermittlungseinrichtung RAMs zur Adreßverwaltung verwendet.
